# EUROPEAN PATENT SPECIFICATION

(11) **EP 2 107 271 B1**
(45) Date of publication and mention of the grant of the patent: **26.10.2011**
(21) Application number: 09004599.8
(22) Date of filing: 30.03.2009
(51) Int. Cl.: F16H 7/08

(54) **Chain tensioner**
Kettenspanner
Tendeur de chaîne

(30) Priority: 02.04.2008 JP 2008095953; 18.03.2009 JP 2009066386
(43) Date of publication of application: 07.10.2009
(73) Proprietor: NTN Corporation, Osaka-shi, Osaka (JP)
(72) Inventor: Sato, Seiji, Iwata-shi, Shizuoka (JP); Furukawa, Tasuku, Iwata-shi, Shizuoka (JP); Ryouno, Yoshiaki, Iwata-shi, Shizuoka (JP); Hayakawa, Hisashi, Iwata-shi, Shizuoka (JP)
(74) Representative: Grünecker, Kinkeldey, Stockmair & Schwanhäusser

(56) References cited:
- DE-A1-102007 023 671
- JP-A- 2002 156 013
- JP-A- 2005 180 484
- US-A- 4 826 470
- US-A1- 2006 063 625

## Description

### BACKGROUND OF THE INVENTION

This invention relates to a chain tensioner for keeping constant the tension of a timing chain for driving camshafts of an automobile engine, according to the preamble of claim 1 and as it is disclosed in DE102007023671A

Automotive engines typically include a crankshaft, camshafts and a timing chain for transmitting the rotation of the crankshaft to the camshafts, thereby selectively opening and closing valves of combustion chambers as the camshafts rotate. Many of such engines include a tension adjusting assembly for keeping the tension of the chain within a proper range, which comprises a chain guide pivotable about a shaft, and a chain tensioner for pressing the chain through the chain guide.

Typically, the chain tensioner comprises a cylindrical housing having open and closed ends, a cylindrical plunger having open and closed ends and slidably inserted in the housing with the open end located in the housing. The housing is formed with an oil supply passage through which hydraulic oil is introduced into a pressure chamber defined in the housing by the plunger. A check valve is provided at the outlet of the oil supply passage for preventing backflow of hydraulic oil from the pressure chamber into the oil supply passage. A return spring biases the plunger outwardly of the housing, thereby pressing its protruding end against the chain through the chain guide (see JP Patent Publications 2002-364720A and 2007-218371A).

In this arrangement, when the tension of the chain increases while the engine is running, the plunger is pushed into the housing by the chain, while hydraulic oil in the pressure chamber flows through a leak gap between sliding surfaces of the plunger and the housing. Because the leak gap is narrow, it allows only a restricted flow of hydraulic oil. The chain tensioner thus performs its dampening function, allowing the plunger to be slowly pushed into the housing, and absorbing the tension of the chain.

When the tension of the chain decreases while the engine is running, the plunger is moved outwardly of the housing under the force of the return spring, thereby re-tensioning the chain. At this time, since hydraulic oil supplied from an oil pump flows into the pressure chamber through the oil supply passage, the plunger quickly moves in this direction.

If air is mixed into hydraulic oil supplied into the pressure chamber through the oil supply passage, when the tension of the chain subsequently increases, the plunger is pushed into the housing while compressing air bubbles. This deteriorates the damping function of the tensioner.

In order to prevent such deterioration in damping function, the above-mentioned conventional chain tensioners have an upwardly extending air vent hole formed in the housing to discharge air in the pressure chamber.

In these conventional chain tensioners, when the engine is stopped, the level of hydraulic oil in the oil supply passage drops because the oil pump also stops simultaneously. This causes a large amount of air to be introduced into the oil supply passage. Thus, when the engine is subsequently restarted, a large amount air flows into the pressure chamber, thus lowering the damping function of the tensioner until the air in the pressure chamber is completely discharged.

An object of the present invention is to provide a chain tensioner in which air is less likely to flow into the pressure chamber through the oil supply passage, and which can quickly perform the damping function, when the engine is restarted.

### SUMMARY OF THE INVENTION

In order to achieve this object, the present invention provides a chain tensioner comprising the features of claim 1.

This chain tensioner may further comprise a screw rod having an external thread formed on its outer periphery and in threaded engagement with an internal thread formed on the inner periphery of the plunger, each of the internal thread and the external thread comprising a pressure flank for receiving pressure when the plunger is pushed into the housing, and a clearance flank having a smaller flank angle than the pressure flank, and having a serration-shaped axial section.

In another arrangement, a ring receiving groove is formed in the inner periphery of the housing, and a plurality of axially spaced circumferential grooves are formed in the outer periphery of the plunger. A register ring is received in the ring receiving groove while being elastically pressed against the outer periphery of the plunger so as to be engageable in any one of the circumferential grooves. The circumferential grooves each comprise a tapered surface along which the register ring can slide while radially expanding when the plunger is pushed outwardly of the housing, and a stopper surface which engages the register ring when the plunger is pushed into the housing, thereby preventing further movement of the plunger in this direction.

In this case, the air vent passage preferably comprises a vertical hole extending upwardly from the oil supply passage, and a lateral hole extending from the vertical hole to the surface of the flange facing the engine cover, with the vertical hole having a helical throttle passage defined by an internal thread formed on the inner periphery of the vertical hole and an externally threaded member in threaded engagement with the internal thread. Further preferably, the vertical hole comprises a small-diameter portion extending upwardly from the oil supply passage, and a large-diameter portion extending upwardly from the small-diameter portion, with the internal thread formed on the inner periphery of the small-diameter portion, and the lateral hole extending from the large-diameter portion. With this arrangement, because the lateral hole extends from the portion of the vertical hole where the internal thread is not formed, burrs produced at the portion where the lateral hole extends are less likely to get stuck between the externally threaded member and the internal thread. This prevents clogging of the throttle passage.

If this invention is applied to a chain tensioner of the internally mounted type, in which the housing has a plurality of mounting pieces formed on the outer periphery thereof and configured to be fixed to a side of an engine block by bolts, this chain tensioner may have one of the following structures.

1) The air vent hole comprises a vertical hole extending upwardly from the oil supply passage and opening to the outer periphery of the housing, the vertical hole having a helical throttle passage defined by an internal thread formed on the inner periphery of the vertical hole and an externally threaded member in threaded engagement with the internal thread.

2) The air vent hole comprises a vertical hole extending upwardly from the oil supply passage and opening to the outer periphery of the housing, the vertical hole having a helical throttle passage defined by an internal thread formed on the inner periphery of the vertical hole and a columnar plug pressed into the internal thread.

The air vent passage comprises a vertical elongate hole extending upwardly from the oil supply passage to the outer periphery of the housing and having a diameter of 0.8 to 1.0 mm.

A check valve may be provided in such an air vent passage for preventing air from flowing into the oil supply passage.

In the chain tensioner according to this invention, since air mixed into hydraulic oil in the oil supply passage is discharged through the air vent passage that branches upwardly from an intermediate portion of the oil supply passage, air is less likely to flow into the pressure chamber from the oil supply passage. The chain tensioner can thus quickly perform the damping function when the engine is restarted.

By providing a check valve in the air vent passage for preventing air from flowing into the oil supply passage through the outlet of the air vent passage, when the engine is stopped, the level of hydraulic oil in the air supply passage is less likely to drop. Thus, when the engine is subsequently restarted, the chain tensioner can quickly perform the damping function.

### BRIEF DESCRIPTION OF THE DRAWINGS

Fig. 1 is a front view of a chain transmission device including a chain tensioner according to a first embodiment of the present invention;

Fig. 2 is an enlarged sectional view of the chain tensioner of Fig. 1 with an air vent passage;

Fig. 3 is a front view of a chain transmission device including a chain tensioner according to a second embodiment of the present invention;

Fig. 4 is an enlarged sectional view of the chain tensioner of Fig. 3 with an air vent passage;

Fig. 5 is a partial enlarged sectional view of a chain tensioner similar to the chain tensioner of Fig. 4 but having a different air vent passage;

Fig. 6 is a partial enlarged sectional view of a chain tensioner similar to the chain tensioner of Fig. 4 and including a still different air vent passage;

Fig. 7 is a partial enlarged sectional view of a chain tensioner similar to the chain tensioner of Fig. 4 and including a further different air vent passage;

Fig. 8 shows a modification of Fig. 2 in which the embodiment of Fig. 2 is applied to a chain tensioner of the internally mounted type;

Fig. 9 is a partial enlarged sectional view of a chain tensioner similar to the chain tensioner of Fig. 8 but having a different air vent passage;

Fig. 10 is a partial enlarged sectional view of a chain tensioner similar to the chain tensioner of Fig. 8 and including a still different air vent passage; and

Fig. 11 is a partial enlarged sectional view of a chain tensioner similar to the chain tensioner of Fig. 8 and including a further different air vent passage;

### DETAILED DESCRIPTION OF THE PREFERRED EMBODIMENTS

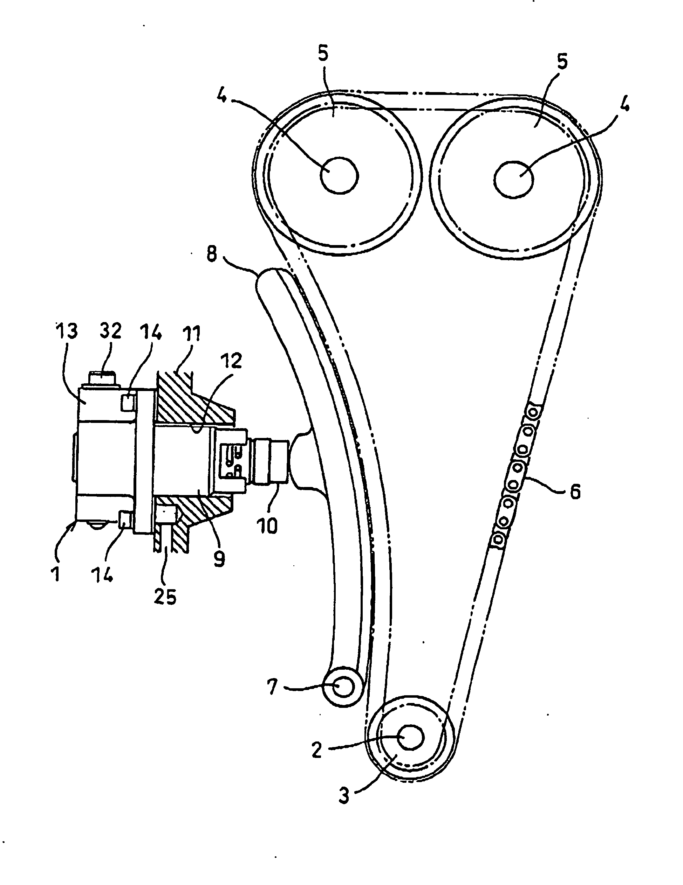

Fig. 1 shows a chain transmission device including a chain tensioner 1 according to the first embodiment of this invention. This chain transmission device includes a sprocket 3 fixed to an engine crankshaft 2, sprockets 5 fixed to respective camshafts 4, and a chain 6 trained around the sprockets 3 and 5. Through the chain 6, rotation of the crankshaft 2 is transmitted to the camshafts 4 to rotate the camshafts 4, thereby opening and closing the corresponding valves (not shown) of combustion chambers.

A chain guide 8 is pivotally supported on a shaft 7 and is in contact with the chain 6. The chain tensioner 1 presses the chain guide 8 against the chain 6.

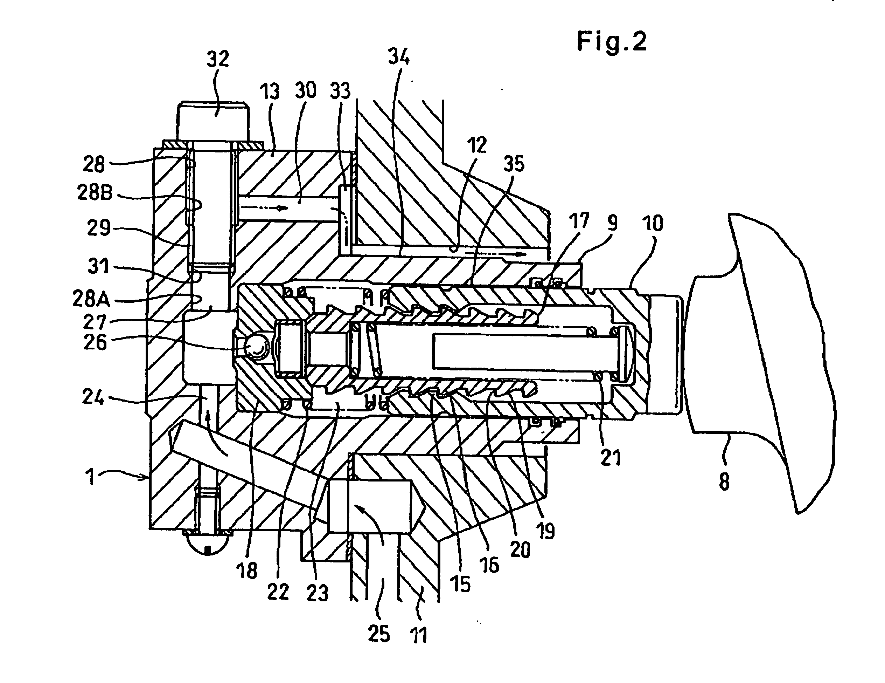

As shown in Fig. 2, the chain tensioner 1 includes a cylindrical housing 9 having an open end and a closed opposite end, and a plunger 10 axially slidably inserted in the housing 9. The housing 9 is fitted in a tensioner mounting hole 12 formed in an engine cover 11 with its open end located in the engine cover 11. The housing 9 has a flange 13 integrally formed on its outer periphery. The flange 13 is fixed to the outer surface of the engine cover 11 by bolts 14 (see Fig. 1).

The plunger 10 is a cylindrical member having an open end and a closed end, and is inserted in the housing 9 with its open end located in the housing 9. The plunger 10 has an internal thread 15 on its radially inner surface. A screw rod 17 is inserted in the plunger 10 with an external thread 16 formed on its outer periphery in threaded engagement with the internal thread 15 of the plunger 10. The screw rod 17 has one end thereof protruding from the plunger 10 and supported by a rod seat 18 provided on the bottom of the housing 9.

The external thread 16 and the internal thread 15 each comprise a pressure flank 19 that receives pressure when the plunger 10 is pushed into the housing 9, and an opposite clearance flank 20 having a smaller flank angle than the pressure flank 19. Thus, the threads 15 and 16 have a serration-shaped axial section.

The plunger 10 is biased outwardly of the housing 9 by a return spring 21 mounted between the plunger 10 and the screw rod 17. Its end protruding from the housing 9 is thus pressed against the chain guide 8. The plunger 10 is further biased outwardly of the housing 9 by an assist spring 22 mounted between the plunger 10 and the rod seat 18.

The housing 9 is formed with an oil supply passage 24 through which hydraulic oil is supplied into a pressure chamber 23 defined by the housing 9 and the plunger 10. The oil supply passage 24 opens to the surface of the flange 13 facing the engine cover 11. Hydraulic oil supplied from an oil pump (not shown) flows through an oil hole 25 formed in the engine cover 11 and the oil supply passage 24 into the pressure chamber 23. At the outlet of the oil supply passage 24, a check valve 26 is provided to prevent backflow of hydraulic oil in the pressure chamber 23 into the passage 24.

The housing 9 is further formed with an air vent passage 27 comprising a vertical hole 28 branching upwardly from an intermediate portion of the oil supply passage 24, and a lateral hole 30 extending from the vertical hole 28 to the surface of the flange 13 facing the engine cover 11. At an intermediate portion of the vertical hole 28, a throttle passage 29 is provided.

The throttle passage 29 is a helical gap defined between an internal thread 31 formed on the inner periphery of the vertical hole 28 and an externally threaded member 32 that is in threaded engagement with the internal thread 31. The throttle passage 29 has a length that is relatively large compared to its diameter and thus can preferentially restrict the flow of liquid. In other words, the throttle passage 29 allows passage of air and restricts the passage of hydraulic oil, which has far higher viscosity than air.

The vertical hole 28 comprises a small-diameter portion 28A extending upwardly from the oil feed passage 24, and a large-diameter portion 28B extending upwardly from the small-diameter portion 28A. The internal thread 31 is formed only on the inner periphery of the small-diameter portion 28A. The lateral hole 30 extends from the large-diameter portion 28B. The inner periphery of the large-diameter portion 28B is a cylindrical surface free of internal threads such as the thread 31.

An air discharge groove 33 is formed in the surface of the flange 13 facing the engine cover 11 to extend from the outlet of the air vent passage 27 (i.e. opening of the lateral hole 30) to the outer periphery of the housing 9. A flat surface 34 is formed on the outer periphery of the housing 9 to define a gap between the flat surface 34 and the inner periphery of the tensioner mounting hole 12. Through this gap, the air discharge groove 33 communicates with the engine room defined in the engine cover 11.

The operation of the chain tensioner 1 is now described. When the tension of the chain 6 decreases while the engine is running, the plunger 10 protrudes from the housing under the combined force of the return spring 21 and the assist spring 22, thus re-tensioning the chain 6. In this state, since hydraulic oil supplied from the oil pump flows into the pressure chamber 23 through the oil supply passage 24, the plunger 10 move quickly in this direction.

When the tension of the chain 6 increases while the engine is running, the plunger 10 is pushed into the housing by the chain 6, thus absorbing the tension of the chain 6. In this state, hydraulic oil in the pressure chamber 23 leaks through a leak gap 35 between sliding surfaces of the plunger 10 and the housing 9 into the engine room. Due to this dampening effect, the plunger 10 slowly moves. While the plunger 10 is being pushed into the housing 9, the screw rod 17 is repeatedly moved back and forth, while rotating relative to the plunger 10, due to the vibration of the chain 6.

When the engine is stopped, the tension of the chain 6 may be kept high according to the stopped positions of cams carried on the camshafts 4. In this state, because the chain 6 does not vibrate, the pressure flank 19 of the internal thread 15 of the plunger 10 is supported by the pressure flank 19 of the external thread 16 of the screw rod 17, so that the plunger 10 is kept stationary Thus, when the engine is restarted, the chain 6 is less likely to slacken, which allows smooth restart of the engine.

When the engine is stopped, the oil pump stops simultaneously, so that the level of the hydraulic oil in the oil supply passage 24 drops, thus introducing air into the oil supply passage 24. When the engine is subsequently restarted, air in the oil supply passage 24 is discharged through the air vent passage 27. This minimizes the possibility of air flowing into the pressure chamber 23, which in turn allows the tensioner to quickly perform its dampening function.

Because air mixed into the oil supply passage 24 is discharged through the air vent passage 27, which branches upwardly from an intermediate portion of the oil supply passage 24, air in the oil supply passage 24 is less likely to flow into the pressure chamber 23, which allows the tensioner to quickly perform its dampening function.

In the above embodiment, in which the air vent passage 27 comprises the vertical hole 28 and the lateral hole 30 extending from the vertical hole 28, it would be feasible to form the internal thread 31 over the entire length of the vertical hole 28 with the lateral hole 30 extending from this vertical hole 28. But with this arrangement, burrs produced at the portion where the lateral hole 30 extends from the vertical hole 28 may get stuck between the externally threaded member 32 and the internal thread 31, thus clogging the throttle passage 29. In contrast, in the above embodiment, because the lateral hole 30 extends from the portion of the vertical hole 28 where the internal thread 31 is not formed, burrs produced at the portion where the lateral hole 30 extends from the vertical hole 28 are less likely to get stuck between the externally threaded member 32 and the internal thread 31, which in turn prevents clogging of the throttle passage 29.

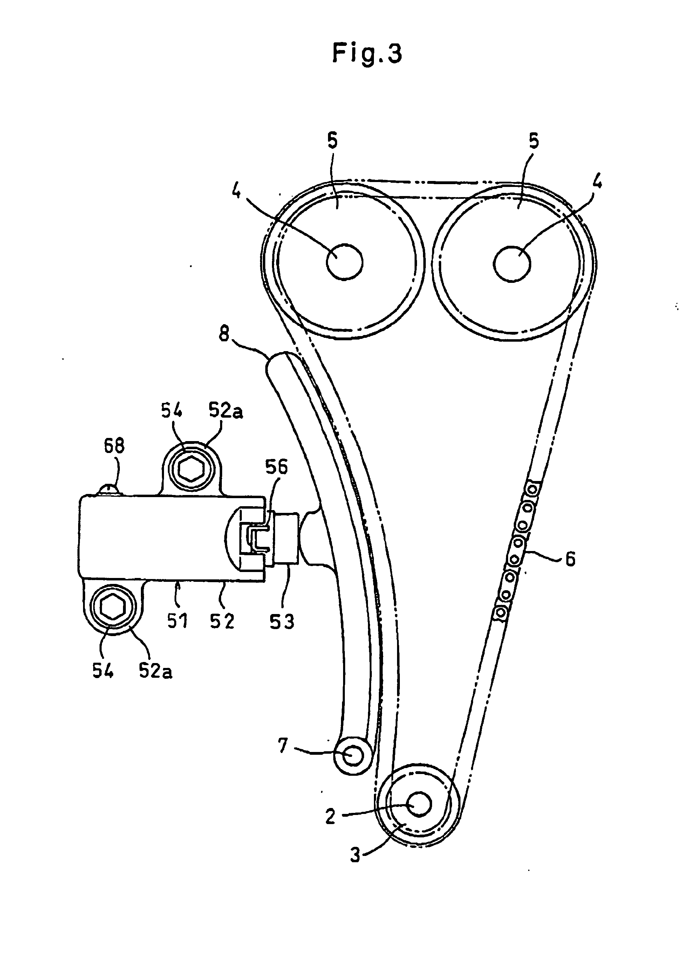

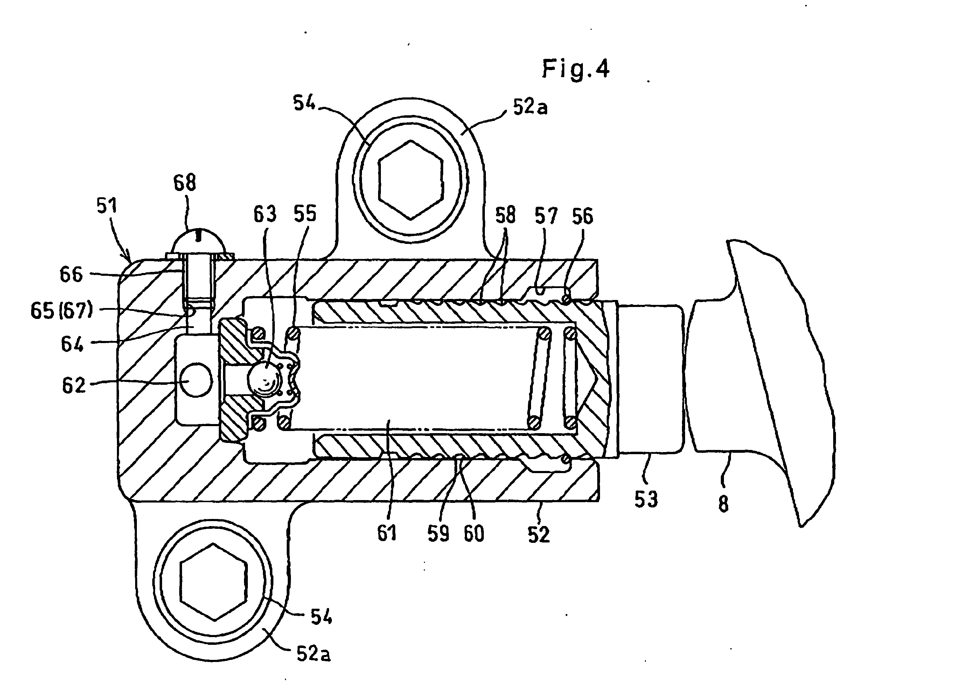

Figs. 3 and 4 show a chain tensioner 51 according to the second embodiment. Elements identical to or corresponding to those of the first embodiment are denoted by identical numerals and their description is omitted.

As shown in Fig. 4, the chain tensioner 51 includes a cylindrical housing 52 having an open end and a closed opposite end, and a plunger 53 axially slidably inserted in the housing 52. The housing 52 has on its outer periphery a plurality of mounting pieces 52a configured to be fixed to a side of an engine block (not shown) by bolts 54, thereby fixing the housing 52 to the engine block.

The plunger 53 is a cylindrical member having an open end and a closed end, and is inserted in the housing 52 with its open end located in the housing 52. The plunger 53 is biased outwardly of the housing 52 by a return spring 55 mounted between the plunger 53 and the housing 52 such. that its end protruding from the housing 52 is pressed against the chain guide 8.

A ring-receiving groove 57 is formed in the inner periphery of the housing 52 near its open end. A plurality of axially spaced circumferential grooves 58 are formed in the outer periphery of the plunger 53. A register ring 56 is received in the groove 57 while being elastically pressed against the outer periphery of the plunger 53. Thus, the register ring 56 is engageable in any one of the circumferential grooves 58.

Each circumferential groove 58 comprises a tapered surface 59 along which the register ring 56 can slide while radially expanding when the plunger 53 is pushed outwardly of the housing 52, and a stopper surface 60 which engages the register ring 56 when the plunger 53 is pushed into the housing 52, thereby preventing further movement of the plunger 53 in this direction. Thus, if the tension of the chain 6 is high when the engine is stopped, the register ring 56 is trapped between the stopper surface 60 of one of the circumferential grooves 58 and the groove 57, thereby preventing the plunger 53 from being further pushed into the housing 52.

The housing 52 is formed with an oil supply passage 62 through which hydraulic oil supplied from an oil pump (not shown) is supplied into a pressure chamber 61 defined by the housing 52 and the plunger 53. At the outlet of the oil supply passage 62, a check valve 63 is provided to prevent backflow of hydraulic oil in the pressure chamber 61 into the passage 62.

The housing 52 is further formed with an air vent passage 64 comprising a vertical hole 65 branching upwardly from an intermediate portion of the oil supply passage 62 and extending to the outer periphery of the housing 52. At an intermediate portion of the vertical hole 65, a throttle passage 66 is provided. The throttle passage 66 is a helical gap defined between an internal thread 67 formed on the inner periphery of the vertical hole 65 and an externally threaded member 68 that is in threaded engagement with the internal thread 67. The throttle passage 66 serves to allow passage of air and restrict the passage of hydraulic oil.

As in the first embodiment, in this embodiment too, when the engine is stopped, the level of the hydraulic oil in the oil supply passage 62 drops, and a large amount of air is introduced into the passage 62. But when the engine is subsequently restarted, air in the oil supply passage 62 is discharged through the air vent passage 64. Thus, air is less likely to flow into the pressure chamber 61 from the oil supply passage 62, which in turn allows the chain tensioner 51 to quickly perform its dampening function.

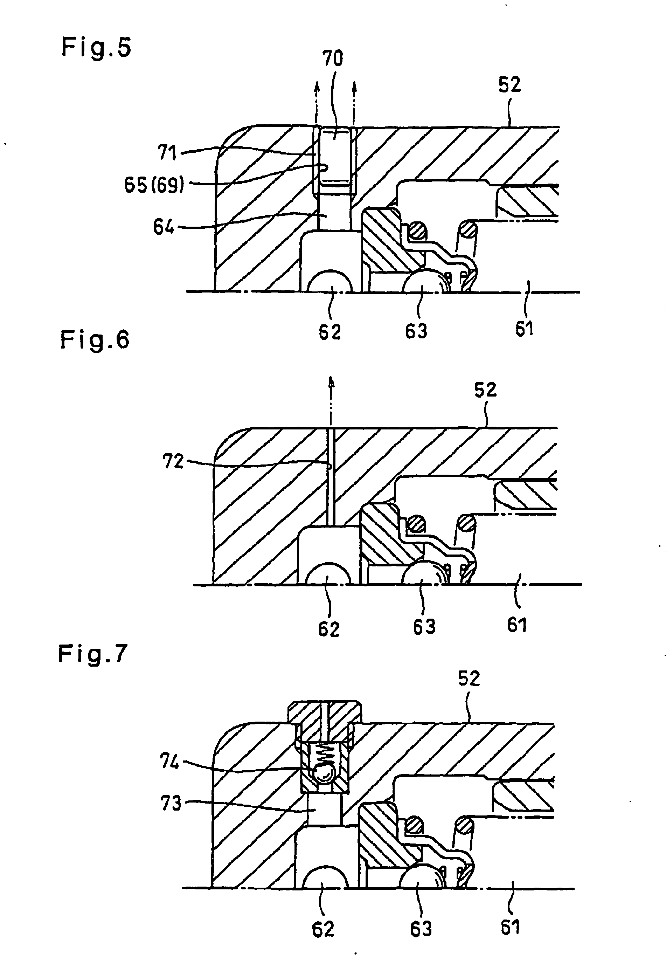

In this embodiment, the helical throttle passage 66 is defined by the internal thread 67 formed on the inner periphery of the vertical hole 65 and the externally threaded member 68, which is in threaded engagement with the internal thread 67. But instead, as shown in Fig. 5, a helical throttle passage 71 may be defined by an internal thread 69 formed on the inner periphery of the vertical hole 65 and a columnar plug 70 pressed into the internal thread 69. Such a throttle passage 71 also serves to allow passage of air and restrict the passage of hydraulic oil.

The air vent passage that branches upwardly from an intermediate portion of the oil supply passage 62 may comprise, as shown in Fig. 6, a vertical hole 72 extending upwardly from the oil supply passage 62 to the outer periphery of the hosing 52. In order for this hole 72 to serve as a throttle passage that permits the passage of air and restricts the passage of hydraulic oil, the hole 72 should be an elongate hole having a diameter of 0.8 to 1.0 mm.

Also, as shown in Fig. 7, a check valve 74 may be provided in an air vent passage 73 that branches upwardly from an intermediate portion of the oil supply passage 62 to prevent air from flowing into the oil supply passage 62 through the outlet of the air vent passage 73. With this arrangement, when the engine is stopped, the level of the hydraulic oil in the oil supply passage 62 is less likely to drop. Thus, when the engine is subsequently restarted, the chain tensioner can quickly perform its dampening function.

A check valve similar to the check valve 74 may be provided in the air vent passage 64 shown in Fig. 4 or 5 or the air vent passage 72 shown in Fig. 6, too.

The chain tensioner 51 of the second embodiment, which is of the type that restricts the movement of the plunger 53 with the register ring 56, is of the internally mounted type, in which the housing 52 is fixed to the engine block. But instead, the second embodiment may be applied to the externally mounted type, in which the housing 52 of the second embodiment is fitted in the tensioner mounting hole 12 formed in the engine cover 11 as with the housing 9 of the first embodiment and exactly as shown and described in the first embodiment.

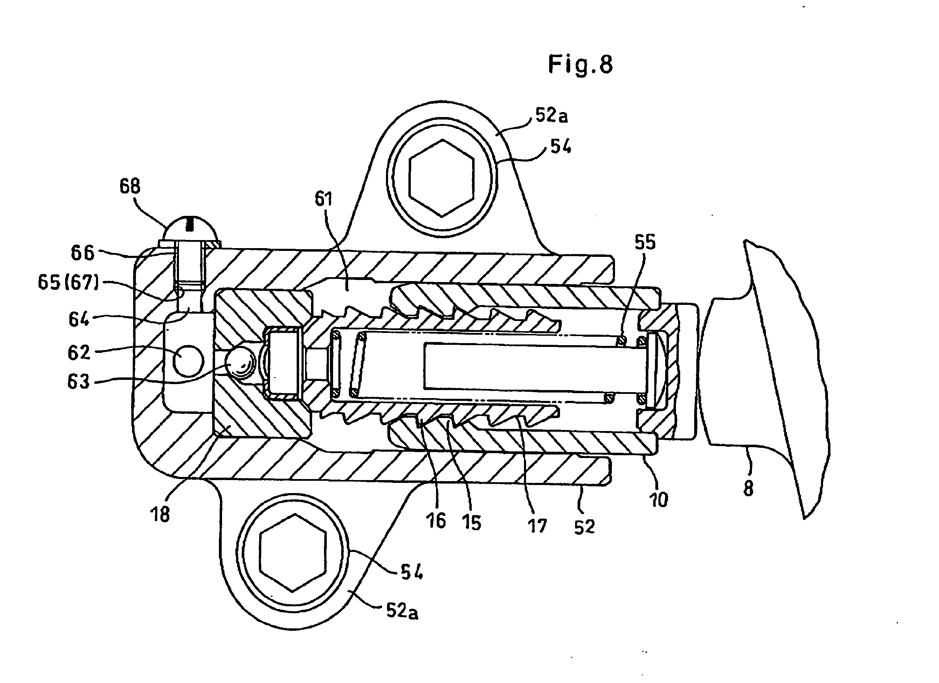

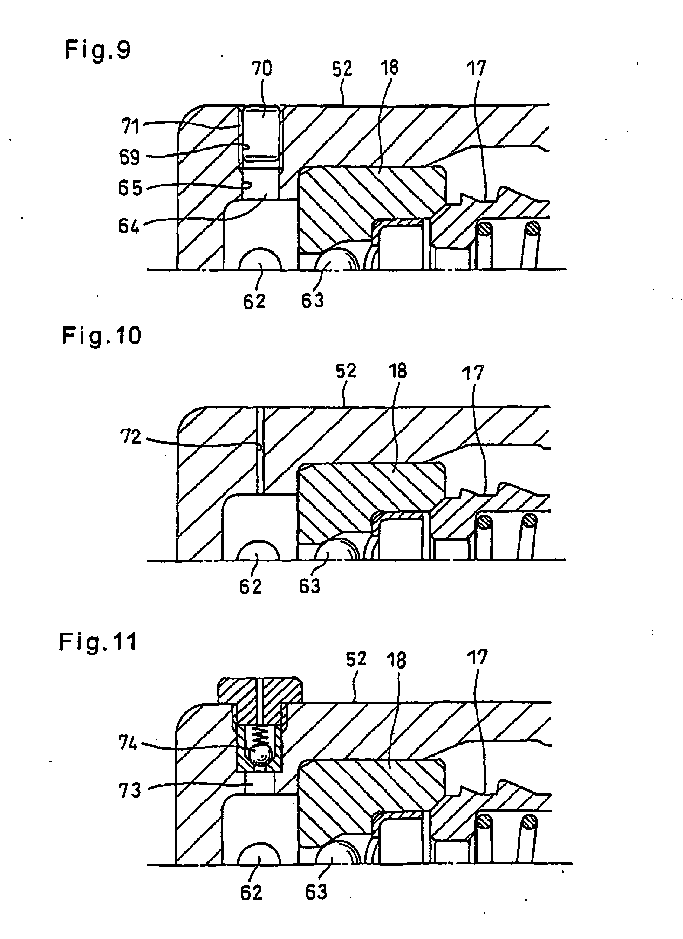

The tensioner 1 of the first embodiment, which is of the type that restricts the movement of the plunger 10 with the screw rod 17, is of the externally mounted type, in which the housing 9 is fitted in the tensioner mounting hole 12 formed in the engine cover 11. But instead, the first embodiment may be applied to the internally mounted type, in which the housing 9 of the first embodiment is fixed to the engine block as shown in Figs. 8 to 11. The air vent passages shown in Figs. 8 to 11 are identical to those of the second embodiment. Thus, in these figures, like elements are denoted by identical numerals, and their description is omitted.

## Claims

1. A chain tensioner (1) comprising
a cylindrical housing (9) having an open end and a closed end,
a cylindrical plunger (10) having an open end and a closed end and slidably inserted in said housing (9, 52) with its open end located in said housing (9) and its closed end protruding from said housing (9), said plunger (10) defining a pressure chamber (23) in said housing (9), said housing (9) being formed with an oil supply passage (24, 62) through which hydraulic oil is introduced into said pressure chamber (23),
a check valve (26) provided at an outlet of the oil supply passage (24, 62) to the pressure chamber (23) for preventing backflow of hydraulic oil from the pressure chamber (23) into the oil supply passage (24, 62), and
a return spring (21) biasing said plunger (10) outwardly of the housing (9) thereby pressing the closed end thereof against a chain (6),
wherein said housing (9) is fitted in a tensioner mounting hole (12) formed in an engine cover (11) and includes a flange (13) provided on an outer periphery of the housing (9) and fixed to an outer surface of the engine cover (11),
wherein a discharge groove (33) is formed in the surface of the flange (13) facing the engine cover (11) to extend to the outer periphery of the housing (9), and
wherein a flat surface (34) is formed on the outer periphery of the housing (9) to define a gap between the flat surface (34) and the inner periphery of the tensioner mounting hole (12), whereby through said gap, said discharge groove (33) communicates with the interior of the engine cover (11),
**characterized in that**
said housing (9) is formed with an air vent passage (27, 73) branching upwardly from an intermediate portion of the oil supply passage (24, 62) and opening to a surface of said flange (13) that faces the engine cover (11), wherein the discharge groove (33) forms an air discharge groove (33) extending from an outlet of the air vent passage (27, 73) to the outer periphery of the housing (9).

2. The chain tensioner of claim 1 wherein said air vent passage (27) comprises a vertical hole (28) extending upwardly from said oil supply passage (24), and a lateral hole (30) extending from said vertical hole (28) to said surface of the flange (13) facing the engine cover (11), said vertical hole (28) having a helical throttle passage (29) defined by an internal thread (31) formed on the inner periphery of the vertical hole (28) and an externally threaded member (32) In threaded engagement with said internal thread (31).

3. The chain tensioner of claim 2, wherein said vertical hole (28) comprises a small-diameter portion (28A) extending upwardly from said oil supply passage (24), and a large-diameter portion (28B) extending upwardly from said small-diameter portion (28A), wherein said internal thread (31) is formed on the inner periphery of said small-diameter portion (28A), and wherein said lateral hole (30) extends from said large-diameter portion (28B).

4. The chain tensioner of anyone of claims 1 to 3 further comprising a screw rod (17) having an external thread (16) formed on its outer periphery and in threaded engagement with an internal thread (15) formed on the inner periphery of said plunger (10), each of said internal thread (15) and said external thread (16) comprising a pressure flank (19) for receiving pressure when the plunger (10) is pushed into the housing (9), and a clearance flank (20) having a smaller flank angle than the pressure flank (19), and having a serration-shaped axial section.

5. The chain tensioner of anyone of claims 1 to 3, wherein a ring receiving groove (57) is formed in the inner periphery of said housing (52), and a plurality of axially spaced circumferential grooves (58) are formed in the outer periphery of the plunger (53), and wherein said chain tensioner further comprises a register ring (56) received in said ring receiving groove (57) while being elastically pressed against the outer periphery of the plunger (53) so as to be engageable in any one of the circumferential grooves (58), said circumferential grooves (58) each comprising a tapered surface (59) along which the register ring (56) can slide while radially expanding when the plunger (53) is pushed outwardly of the housing (52), and a stopper surface (60) which engages the register ring (56) when the plunger 53 is pushed into the housing (52), thereby preventing further movement of the plunger (52) in this direction.

6. The chain tensioner of any of claims 1 to 5, wherein a check valve (74) is provided in said air vent passage (73) for preventing air from flowing into said oil supply passage (62).

## Patentansprüche

1. Kettenspannvorrichtung (1), die umfasst:
ein zylindrisches Gehäuse (9), das ein offenes Ende und ein geschlossenes Ende hat,
einen zylindrischen Kolben (10), der ein offenes Ende und ein geschlossenes Ende hat und in das Gehäuse (9, 52) verschiebbar so eingeführt ist, dass sich sein offenes Ende in dem Gehäuse (9) befindet und sein geschlossenes Ende aus dem Gehäuse (9) vorsteht,
der Kolben (10) eine Druckkammer (23) in dem Gehäuse (9) bildet und das Gehäuse (9) mit einem Ölzuführkanal (24, 62) versehen ist, über den Hydrauliköl in die Druckkammer (23) eingeleitet wird,
ein Rückschlagventil (26), das an einem Auslass des Ölzuführkanals (24, 62) zu der Druckkammer (23) vorhanden ist, um Rückstrom von Hydrauliköl aus der Druckkammer (23) in den Ölzuführkanal (24, 62) zu verhindern, und
eine Rückstellfeder (21), die den Kolben (10) aus dem Gehäuse (9) heraus spannt, um so das geschlossene Ende desselben an eine Kette (6) zu drücken,
wobei das Gehäuse (9) in ein Spannvorrichtungs-Anbringungsloch (12) eingesetzt ist, das in einer Motorabdeckung (11) ausgebildet ist, und es einen Flansch (13) enthält, der an einem Außenumfang des Gehäuses (9) vorhanden ist und an einer Außenfläche der Motorabdeckung (11) befestigt ist,
eine Ausstoßnut (33) in der der Motorabdeckung (11) zugewandten Fläche des Flansches (13) so ausgebildet ist, dass sie sich zu dem Außenumfang des Gehäuses (9) erstreckt,
und
eine plane Fläche (34) an dem Außenumfang des Gehäuses (9) so ausgebildet ist, dass ein Zwischenraum zwischen der planen Fläche (34) und dem Innenumfang des Spannvorrichtungs-Anbringungslochs (12) ausgebildet ist, wobei über den Zwischenraum die Ausstoßnut (33) mit dem Innenraum der Motorabdeckung (11) in Verbindung steht,
**dadurch gekennzeichnet, dass**
das Gehäuse (9) mit einem Entlüftungskanal (27, 73) versehen ist, der sich von einem Zwischenabschnitt des Ölzuführkanals (6) nach oben verzweigt und sich zu einer der Motorabdeckung (11) zugewandten Fläche des Flansches (13) öffnet, wobei die Ausstoßnut (33)
eine Luftausstoßnut (33) bildet, die sich von einem Auslass des Entlüftungskanals (27, 73) zu dem Außenumfang des Gehäuses (9) erstreckt.

2. Kettenspannvorrichtung nach Anspruch 1, wobei der Entlüftungskanal (27) ein vertikales Loch (28), das sich von dem Ölzuführkanal (24) nach oben erstreckt, sowie ein Querloch (30) umfasst, das sich von dem vertikalen Loch (28) zu der der Motorabdeckung (11) zugewandten Fläche des Flansches (13) erstreckt, und das vertikale Loch (28) einen spiralförmigen Drosselkanal (29) aufweist, der durch ein Innengewinde (31), das am Innenumfang des vertikalen Lochs (28) ausgebildet ist, sowie ein Außengewindeelement (32) gebildet wird, das in Gewindeeingriff mit dem Innengewinde (31) ist.

3. Kettenspannvorrichtung nach Anspruch 2, wobei das vertikale Loch (28) einen Abschnitt (28A) mit kleinem Durchmesser, der sich von dem Ölzuführkanal (24) nach oben erstreckt, sowie einen Abschnitt (28B) mit großem Durchmesser umfasst, der sich von dem Abschnitt (28A) mit kleinem Durchmesser nach oben erstreckt, das Innengewinde (31) am Innenumfang des Abschnitts (28A) mit kleinem Durchmesser ausgebildet ist und sich das Querloch (30) von dem Abschnitt (28B) mit großem Durchmesser aus erstreckt.

4. Kettenspannvorrichtung nach einem der Ansprüche 1 bis 3, die des Weiteren eine Gewindestange (17) umfasst, an deren Außenumfang ein Außengewinde (16) ausgebildet ist, das in Gewindeeingriff mit einem am Innenumfang des Kolbens (10) ausgebildeten Innengewinde (15) ist, wobei das Innengewinde (15) und das Außengewinde (16) jeweils eine tragende Flanke (19), die Druck aufnimmt, wenn der Kolben (10) in das Gehäuse (9) geschoben wird, sowie eine nichttragende Flanke (20) umfassen, die einen kleineren Teilflankenwinkel hat als die tragende Flanke (19), und sie jeweils einen sägezahnförmigen Axialschnitt aufweisen.

5. Kettenspannvorrichtung nach einem der Ansprüche 1 bis 3, wobei eine Ringaufnahmenut (57) am Innenumfang des Gehäuses (52) ausgebildet ist und eine Vielzahl axial beabstandeter Umfangsnuten (58) am Außenumfang des Kolbens (53) ausgebildet sind, die Kettenspannvorrichtung des Weiteren einen Ausrichtring (56) umfasst, der in der Ringaufnahmenut (57) aufgenommen ist und dabei elastisch an den Außenumfang des Kolbens (53) gedrückt wird, so dass er mit einer der Umfangsnuten (58) in Eingriff gebracht werden kann, die Umfangsnuten (58) jeweils eine konische Fläche (59), an der der Ausrichtring (56) entlang gleiten kann, während er sich radial ausdehnt, wenn der Kolben (53) aus dem Gehäuse (52) heraus geschoben wird, sowie eine Anschlagfläche (60) umfassen, die mit dem
Ausrichtring (56) in Eingriff kommt, wenn der Kolben (53) in das Gehäuse (52) geschoben wird, um so weitere Bewegung des Kolbens (53) in dieser Richtung zu verhindern.

6. Kettenspannvorrichtung nach einem der Ansprüche 1 bis 5, wobei ein Rückschlagventil (74) in dem Entlüftungskanal (73) vorhanden ist, um zu verhindern, dass Luft in den Ölzuführkanal (62) hinein strömt.

## Revendications

1. Tendeur de chaîne (1) comprenant
un boîtier cylindrique (9) ayant une extrémité ouverte et une extrémité fermée,
un plongeur cylindrique (10) ayant une extrémité ouverte et une extrémité fermée et inséré d'une manière coulissante dans ledit boîtier (9, 52), son extrémité ouverte étant située dans ledit boîtier (9), et son extrémité fermée faisant saillie dudit boîtier (9), ledit plongeur (10) définissant une chambre de pression (23) dans ledit boîtier (9), ledit boîtier (9) présentant un passage d'amenée d'huile (24, 62) à travers lequel de l'huile hydraulique est introduite dans ladite chambre de pression (23), une vanne de retenue (26) réalisée à une sortie du passage d'amenée d'huile (24, 62) à la chambre de pression (23) pour empêcher un reflux de l'huile hydraulique de la chambre de pression (23) dans le passage d'amenée d'huile (24, 62), et
un ressort de rappel (21) sollicitant ledit plongeur (10) vers l'extérieur du boîtier (9) en pressant ainsi son extrémité fermée contre une chaîne (6),
où ledit boîtier (9) est inséré dans un trou de montage de tendeur (12) formé dans un couvercle de moteur (11) et comprend une bride (13) réalisée sur une périphérie extérieure du boîtier (9) et fixée à une surface extérieure du couvercle de moteur (11),
où une rainure de décharge (33) est formée dans la surface de la bride (13) orientée vers le couvercle de moteur (11) pour s'étendre à la périphérie extérieure du boîtier (9), et
où une surface plate (34) est formée sur la périphérie extérieure du boîtier (9) pour définir un espace entre la surface plate (34) et la périphérie intérieure du trou de montage de tendeur (12), moyennant quoi par ledit espace,
ladite rainure de décharge (33) communique avec l'intérieur du couvercle de moteur (11),
**caractérisé en ce que**
ledit boîtier (9) présente un passage d'évacuation d'air (27, 73) se séparant vers le haut à une portion intermédiaire du passage d'amenée d'huile (24, 62) et s'ouvrant vers une surface de ladite bride (13) qui est orientée vers ledit couvercle de moteur (11), où la rainure de décharge (33) forme une rainure de décharge d'air (33) s'étendant d'une sortie du passage d'évacuation d'air (27, 73) à la périphérie extérieure du boîtier (9).

2. Tendeur de chaîne selon la revendication 1, dans lequel ledit passage d'évacuation d'air (27) comprend un trou vertical (28) s'étendant vers le haut depuis ledit passage d'amenée d'huile (24) et un trou latéral (30) s'étendant dudit trou vertical (28) à ladite surface de la bride (13) orientée vers le couvercle de moteur (11), ledit trou vertical (28) ayant un passage d'étranglement hélicoïdal (29) défini par un filetage interne (31) formé sur la périphérie intérieure du trou vertical (28) et un élément fileté extérieurement (32) en prise de filetage avec ledit filetage interne (31).

3. Tendeur de chaîne selon la revendication 2, dans lequel ledit trou vertical (28) comprend une portion d'un petite diamètre (28A) s'étendant vers le haut depuis ledit passage d'amenée d'huile (24), et une portion d'un grand diamètre (28B) s'étendant vers le haut depuis ladite portion d'un petit diamètre (28A), où ledit filetage interne (31) est formé sur la périphérie intérieure de la portion d'un petit diamètre (28A), et où ledit trou latéral (30) s'étend depuis ladite portion d'un grand diamètre (28B).

4. Tendeur de chaîne selon l'une quelconque des revendications 1 à 3, comprenant en outre une tige de vis (17) ayant un filetage externe (16) formé sur sa périphérie extérieure et en prise de filetage avec un filetage interne (15) formé sur la périphérie intérieure dudit plongeur (10), chacun parmi ledit filetage interne (15) et ledit filetage externe (16) comprenant un flanc de pression (19) pour recevoir la pression lorsque le plongeur (10) est poussé dans le boîtier (9), et un flanc de jeu (20) ayant un angle de flanc plus petit que le flanc de pression (19) et ayant une section axiale d'une forme dentelée.

5. Tendeur de chaîne selon l'une quelconque des revendications 1 à 3, dans lequel une rainure de réception de base (57) est formée dans la périphérie intérieur dudit boîtier (52), et plusieurs rainures circonférentielles axialement espacées (58) sont formées dans la périphérie extérieure du plongeur (53), et où ledit tendeur de chaîne comprend en outre une bague de coïncidence (56) reçue dans ladite rainure de réception de bague (57) tout en étant pressée élastiquement contre la périphérie extérieure du plongeur (53) de manière à pouvoir venir en prise avec l'une quelconque des rainures circonférentielles (58), lesdites rainures circonférentielles (58) comprenant chacune une surface conique (59) le long de laquelle la bague de coïncidence (56) peut coulisser tout en s'expansant radialement lorsque le plongeur (53) est poussé en dehors du boîtier (52), et une surface d'arrêt (60) qui vient en prise avec la bague de coïncidence (56) lorsque le plongeur (52) est poussé dans le boîtier (52), en empêchant ainsi tout mouvement ultérieur du plongeur (53) dans cette direction.

6. Tendeur de chaîne selon l'une quelconque des revendications 1 à 5, dans lequel une vanne de retenue (74) est réalisée dans ledit passage d'évacuation d'air (73) pour empêcher un écoulement d'air dans ledit passage d'amenée d'huile (62).
